**Europäisches Patentamt**

**European Patent Office**

**Office européen des brevets**

(19)

(11) Veröffentlichungsnummer : **0 529 223 B1**

(12)
# EUROPÄISCHE PATENTSCHRIFT

(45) Veröffentlichungstag der Patentschrift :
07.09.94 Patentblatt 94/36

(51) Int. Cl.⁵ : **G01D 7/08**

(21) Anmeldenummer : **92110275.2**

(22) Anmeldetag : **17.06.92**

(54) **Anzeigeeinrichtung für eine analoge Anzeige von mehreren Messwerten mit einem Monitor.**

(30) Priorität : **23.08.91 DE 4127963**

(43) Veröffentlichungstag der Anmeldung :
**03.03.93 Patentblatt 93/09**

(45) Bekanntmachung des Hinweises auf die
Patenterteilung :
**07.09.94 Patentblatt 94/36**

(84) Benannte Vertragsstaaten :
**ES FR GB IT**

(56) Entgegenhaltungen :
**DE-A- 3 812 101**
**PATENT ABSTRACTS OF JAPAN vol. 013, no.**
**152 (P-856)13. April 1989**

(73) Patentinhaber : **HOFMANN**
**WERKSTATT-TECHNIK GMBH**
**Werner-von-Siemens-Strasse 2**
**D-64319 Pfungstadt (DE)**

(72) Erfinder : **Zenzinger, Hans-Michael**
**Mainzer Strasse 1**
**W-6084 Gernsheim/Rh. (DE)**

(74) Vertreter : **Nöth, Heinz, Dipl.-Phys.**
**Patentanwalt,**
**Mozartstrasse 17**
**D-80336 München (DE)**

EP 0 529 223 B1

EP 0 529 223 B1

## Beschreibung

Die Erfindung betrifft eine Anzeigeeinrichtung für eine analoge Anzeige von mehreren Meßwerten mit einem Monitor.

Aus den Patent Abstracts of Japan, vol. 013. no. 152 (P-856) vom 13. April 1989 & JP-63 313 025 (Sanyo Electric Co LTD) vom 21. Dezember 1988 ist eine derartige Anzeige eines elektronisch aufzeichnenden Fieberthermometers bekannt, bei der Skalenausschnitte in einer den Meßwerten entsprechenden Anzahl am Monitorbildschirm angeordnet sind, die jeweiligen Skalenteile der Skalenausschnitte, welche dem Mittelwert der innerhalb der Skalenausschnitte anzuzeigenden jeweiligen Meßwerte entsprechen, auf einer Bezugslinie auf dem Bildschirm liegen, und der jeweilige Meßwert in den zugeordneten Skalenausschnitten durch eine Markierung abgebildet ist. Die Meßwerte, die eine im Zeitverlauf schwankende Körpertemperatur darstellen, werden zeitlich aufeinanderfolgend an nur einer Meßstelle am Körper erfaßt.

Desweiteren ist aus der DE-A-38 12 101 ein Meßgerät für eine Mehrzahl von Meßstellen bekannt, wobei Soll- und Istwerte auf einem Bildschirm mittels verschiedenfarbiger Balken dargestellt werden.

Aufgabe der Erfindung ist es, eine Anzeigevorrichtung zum analogen Anzeigen mehrerer Meßwerte verschiedener Meßwertaufnehmer auf einem Bildschirm eines Monitors mit hoher Auflösung und Genauigkeit bei guter Ablesbarkeit zu schaffen, bei der die Differenz zweier Meßwerte gegenüber einem Sollwert signalisiert werden soll.

Diese Aufgabe wird erfindungsgemäß dadurch gelöst, daß ein Komparator vorhanden ist, der ein Farbwechselsignal an eine Farbwechseleinrichtung für die durch eine Skalenfarbfülleinrichtung proportional den jeweils anzuzeigenden Meßwerten mit Farbe ausgefüllten Skalenausschnitte liefert, wenn die Differenz zwischen zwei Meßwerten aus zwei verschiedenen Meßwertaufnehmern einen Sollwert überschreitet.

Die Skalenabschnitte sind proportional den jeweils anzuzeigenden Meßwerten mit Farbe angefüllt. Schwankungen der Meßwerte äußern sich in Schwankungen des Auffüllgrades. Ferner lassen sich aus den sich ändernden Auffüllgraden in den Skalenausschnitten Tendenzen der Meßwerte in Abhängigkeit von vorgegebenen Parametern kenntlich machen. Des weiteren kann eine voreingestellte Differenz zwischen zwei Meßwerten durch einen Farbumschlag der Farbauffüllung in den jeweiligen Skalenausschnitten kenntlich gemacht werden.

Dadurch, daß man für jeden der darzustellenden Meßwerte einen Skalenausschnitt einer gespreizten Skala darstellt, erreicht man, daß immer nur der aktuelle Teil auf dem Bildschirm dargestellt werden kann. Gleichzeitig erreicht man hierdurch eine hohe Auflösung und Genauigkeit der Analoganzeige, die zusätzlich durch die Farbauffüllung und den Farbwechsel auch noch in größerer Entfernung gut ablesbar ist.

Zusätzlich zu der Analoganzeige lassen sich die Vorteile, die durch eine Monitoranzeige geboten werden, erreichen. Beispielsweise besteht die Möglichkeit des Dialogs und der praktisch unbegrenzten Gestaltungsmöglichkeiten, wobei je nach Bedarf Digitalanzeigen eingeblendet und ausgeblendet werden können. Darüber hinaus läßt sich eine Tendenz sich verändernder angezeigter Meßwerte kenntlich machen.

Die Bezugslinie, bezüglich welcher die Positionierung der jeweiligen Skalenausschnitte erfolgt, kann auf dem Bildschirm so angeordnet sein, daß bei horizontaler Bezugslinie oberhalb und unterhalb und bei vertikaler Bezugslinie zu beiden Seiten der Bezugslinie ausreichend Platz für Skalenteile ist, durch die mit Hilfe der Markierung, beispielsweise Farbmarkierung, Meßwerte innerhalb eines bestimmten Bereichs, beispielsweise zumindest innerhalb eines Toleranzbereichs, angezeigt werden können.

In vorteilhafter Weise sind die Skalenausschnitte balkenförmig ausgebildet, wobei quer zur Längsausdehnung der Balken Unterteilungsstriche für die Skalenunterteilung und Meßwertanzeige vorgesehen sind.

Bevorzugte Anwendung findet die Anzeigeeinrichtung bei einem Bremsenprüfstand, wobei für die Zweiradbremsenprüfung zwei Skalenausschnittte auf dem Bildschirm angeordnet sind und für die Einzelradprüfung ein Skalenausschnitt genügt.

Anhand der Figuren wird an Ausführungsbeispielen die Erfindung näher erläutert. Es zeigt:

Fig. 1 eine Skalenanordnung, die ein Ausfünrungsbeispiel der Erfindung ist, auf einem Bildschirm in Ruhestellung;

Fig. 2 eine Skalenanordnung, die ein Ausführungsbeispiel der Erfindung ist, bei der Anzeige bestimmter Meßwerte, insbesondere von Bremskraftmeßwerten in einem Bremsenprüfstand;

Fig. 3 ein Ausführungsbeispiel für eine Skalenanordnung auf einem Bildschirm bei einem Einzelradbremsprüfstand;

Fig. 4 ein Blockschaltbild zur Darstellung der Aufbereitung der von einer Bremskraftmeßeinrichtung gelieferten Meßwerte für eine in der Fig. 2 dargestellte Skalenanordnung für einen Bremsenprüfstand;

Fig. 5 ein Blockschaltbild zur Erläuterung der Auswertung der von einer Bremskraftmeßeinrichtung gelieferten Meßwerte für eine Einzelradprüfung in einem Bremsenprüfstand.

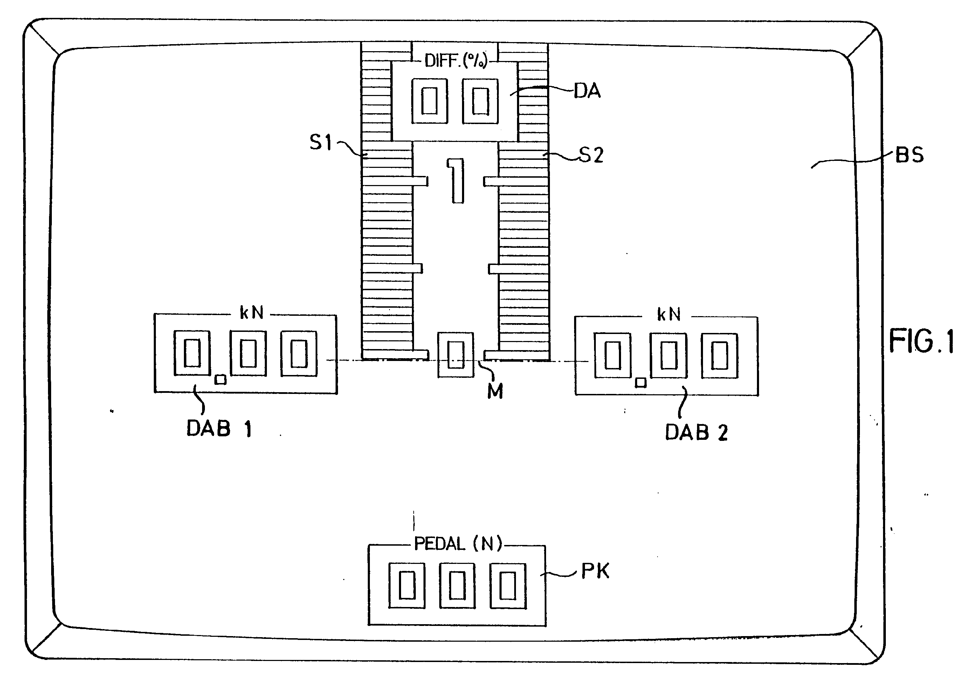

In der Fig. 1 ist schematisch ein Bildschirm BS eines Monitors für die Anzeige von Meßwerten, welche

2

beim dargestellten Ausführungsbeispiel Bremskraftmeßwerte eines Bremsenprüfstands sind, dargestellt. Auf dem Bildschirm BS sind zwei Skalenausschnitte S1 und S2 dargestellt. Die beiden Skalenausschnitte S1 und S2 befinden sich in ihrer Nullstellung. Die Nullpunktlage der beiden Skalenausschnitte S1 und S2 liegen bei einer Bezugslinie M. Beim dargestellten Ausführungsbeispiel ist die Bezugslinie M eine horizontale Linie, die in einem horizontalen Mittenbereich des Bildschirmes BS liegt. Es ist auch möglich, als Bezugslinie eine vertikale Bezugslinie zu verwenden, die in einem vertikalen mittleren Bereich des Bildschirmes BS angeordnet ist. Die beiden Skalenausschnitte erstrecken sich in Balkenform senkrecht zur vertikalen Bezugslinie M. Die Skalenausschnitte S1 und S2 sind quer zu ihrer Längsausdehnung durch Unterteilungsstriche unterteilt. Bei den Skalen S1 und S2 handelt es sich um gespreizte Skalenausschnitte.

Zusätzlich können am Bildschirm BS noch Digitalanzeigen, beispielsweise Digitalanzeigen DAB1 und DAB2 für Meßwerte, welche auf den beiden Skalenabschnitten S1 und S2 analog dargestellt sind, vorgesehen sein.

Bei Anwendung der in der Fig. 1 dargestellten Skalenanordnung auf dem Bildschirm BS1 in einem Bremsenprüfstand lassen sich in dem gespreizten Skalenausschnitt S1 die Bremskraftwerte der Bremse des jeweils linken Rades und in dem Skalenausschnitt S2 die Bremskraftwerte der Bremse des jeweils rechten Rades eines Kraftfahrzeugs darstellen.

In einer Digitalanzeige DA ist es möglich, beispielsweise in Prozentangabe die Differenz zwischen den beiden Bremskraftwerten der Skalenausschnitte S1 und S2 digital anzugeben. In den Digitalanzeigen DAB1 und DAB2 können in digitaler Form die jeweiligen Bremskraftwerte der Skalen S1 und S2 ebenfalls angezeigt werden. In einer Digitalanzeige PK läßt sich die jeweils auf das Bremspedal des Kraftfahrzeugs ausgeübte Pedalkraft angeben.

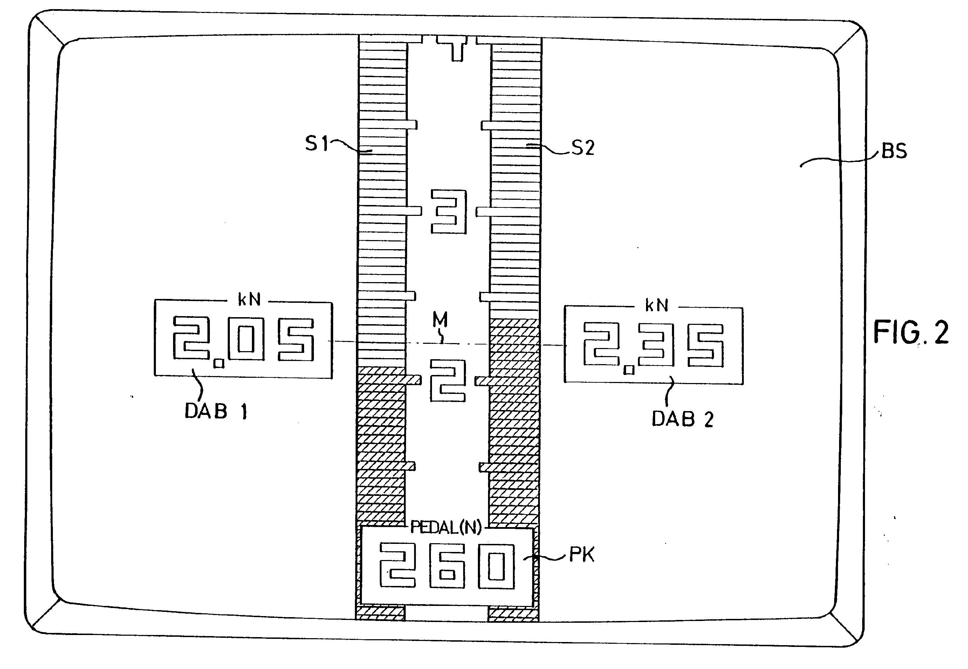

Wenn eine Messung, insbesondere Bremskraftmessung bzw. Bremsenprüfung eines Kraftfahrzeugs, durchgeführt wird, werden zur analogen Anzeige der gemessenen Bremskraftwerte die beiden Skalenausschnitte S1 und S2 auf dem Bildschirm BS in ihrer Längsrichtung bezüglich der Bezugslinie M bewegt und in Abhängigkeit von den gemessenen Bremswerten positioniert, wie es anhand der Fig. 2 näher erläutert wird.

Die beiden Skalenausschnitte S1 und S2 werden in der Weise senkrecht zur Bezugslinie M bewegt und so positioniert, daß der Skalenteil bzw. der entsprechende Unterteilungsstrich der Skala, welcher dem Mittelwert der beiden gemessenen und in den Skalenausschnitten S1 und S2 darzustellenden Meßwerte, insbesondere Bremskraftwerte) entspricht, auf der Bezugslinie M liegt. Beim dargestellten Ausführungsbeispiel betragen die in den beiden Skalenausschnitten S1 und S2 dargestellten Bremskraftwerte 2,05 kN für das linke Rad und 2,35 kN für das rechte Rad. Diese Werte sind digital auch in den beiden Digitalanzeigeeinrichtungen DAB1 und DAB2 angezeigt.

Diese Werte sind analog in den Skalenausschnitten S1 und S2 dargestellt. Die analoge Anzeige kann mit Hilfe einer Füllfarbe, z. B. Gelb für die eine Skala und Grün für die andere Skale oder für beide Skalen mit der gleichen Farbauffüllung angezeigt werden. Die Farbauffüllung ist in der Fig. 2 durch die in die Skalenausschnitte S1 und S2 eingezeichnete Schraffierung dargestellt. Der Mittelwert der beiden Bremskraftwerte beträgt 2,20 kN. Der diesem Mittelwert entsprechende Teilstrich eines jeden Skalenausschnittes S1 und S2 liegt auf der Bezugslinie M, welche beim dargestellten Ausführungsbeispiel etwa die horizontale Mittellinie des Bildschirmes BS ist.

Wie die Fig. 2 zeigt, wird ferner in digitaler Form durch die digitale Anzeigeeinrichtung PK die Pedalkraft für die beiden gemessenen Bremskraftwerte mit 260 N angegeben.

Wie die Fig. 2 zeigt, erstrecken sich die beiden Skalenausschnitte S1 und S2 parallel zueinander. Sie werden auch parallel zueinander auf dem Bildschirm BS bewegt. Diese Bewegung vermittelt den Anschein einer rollierenden Skala. Die Unterteilung der Skalenabschnitte in ihrer gespreizten dargestellten Form kann in der Weise erfolgen, daß sie aus einer relativ großen Entfernung, beispielsweise 5 bis 6 m, auch gut abgelesen werden kann.

Wenn die Differenz zwischen den beiden Bremskraftwerten einen bestimmten Wert, der, wie anhand der Fig. 1 schon erläutert, digital durch die Anzeigeeinrichtung DA angezeigt werden kann, überschreitet, kann eine Farbänderung der Farbfüllung der beiden Skalenausschnitte S1 und 2 erfolgen, beispielsweise von Gelb bzw. Gelb/Grün nach Rot.

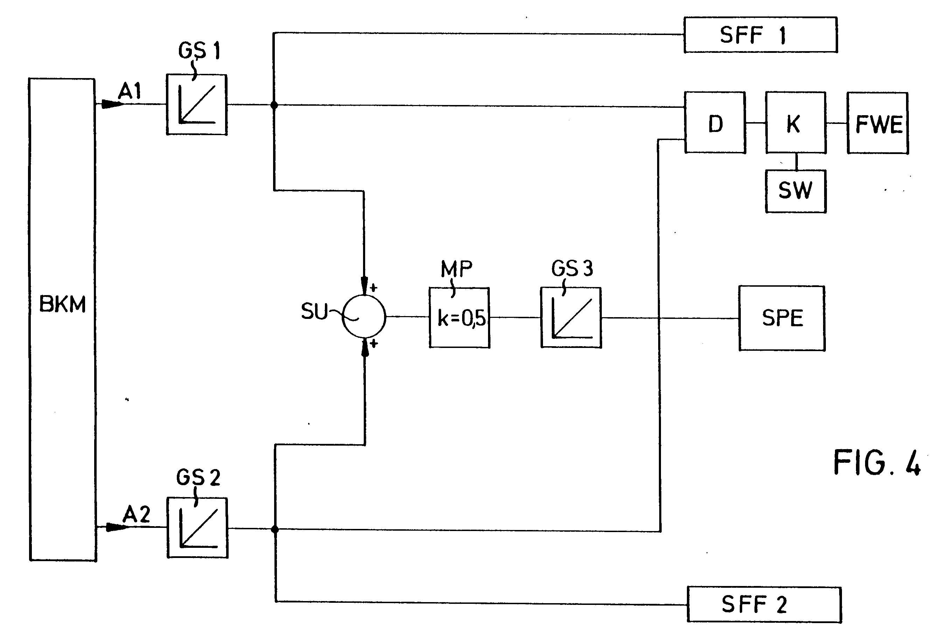

In der Fig. 4 ist ein Blockschaltbild einer Auswerteeinrichtung für die beiden von einer Bremskrafteinrichtung BKM kommenden Meßsignale, die Meßwerte A1 und A2 für an zwei Kraftfahrzeugrädern gemessenen Bremskräfte darstellen, gezeigt. Die beiden Meßwerte A1 und A2 werden über Glättungsschaltungen GS1 und GS2, welche als Tiefpaßfilter ausgebildet sein können, an eine Summiereinrichtung SU weitergegeben. In der Summiereinrichtung wird die Summe der beiden Meßwerte A1 und A2 gebildet. In einer der Summiereinrichtung nachgeschalteten Multipliziereinrichtung MP wird das Summensignal mit einem Faktor k = 0,5 multipliziert. Das Ausgangssignal der Multipliziereinrichtung MP stellt einen Mittelwert $\frac{A1 + A2}{2}$ der beiden Meßwerte dar. Das Mittelwertsignal wird über eine weitere Glättungsschaltung GS3, welche ebenfalls als Tiefpaßfilter ausgebildet sein kann, an eine Skalenpositioniereinrichtung SPE weitergeleitet. Durch das Tiefpaßfilter werden Schwankungen des Mittelwertsignales gedämpft, so daß eine kontinuierliche Bewegung der Skalenabschnitte S1 und S2 in die in der Fig. 2 dargestellte Position durch die Skalenpositioniereinrichtung SPE erreicht wird. In dieser Position befinden sich die Skalenteile bzw. die Unterteilungsstriche der beiden Skalenausschnitte S1 und S2, welche dem Mittelwert der beiden Meßwerte A1 und A2 entsprechen, auf der Bezugslinie M (Fig. 2).

Die Meßwerte A1 und A2 werden ferner einer ersten Skalenfarbfülleinrichtung SFF1 für den Skalenausschnitt S1 und einer zweiten Skalenfarbfülleinrichtung SFF2 für den Skalenausschnitt S2 zugeleitet. Die beiden Skalenausschnitte werden, wie in der Fig. 2 dargestellt, proportional den beiden Meßwerten A1 und A2 mit Farbe angefüllt. Diese Farbanfüllung bildet eine Markierung, die eine Analoganzeige der beiden Meßwerte A1 und A2 darstellt. Schwankungen der beiden Bremskraftmeßwerte im Auffüllgrad sind ein Maß für die Unrundheit an den beiden Kraftfahrzeugrädern.

Wie aus der Fig. 4 ferner zu ersehen ist, werden die beiden Meßwertsignale einem Differenzbildner D zugeführt. Dieser liefert an seiner Ausgangsseite ein der Differenz der beiden Meßwerte A1 und A2 proportionales Signal. Dieses Signal wird einem Komparator K zugeführt, an den ferner ein Festwertspeicher SW angeschlossen ist. Im Festwertspeicher wird ein Toleranzwert für die Differenz der beiden Meßwerte A1 und A2 gespeichert. Wenn die im Differenzbildner D gebildete Differenz den im Festwertspeicher FW enthaltenen Sollwert der Toleranz überschreitet, liefert der Kamparator K ein Ausgangssignal an eine Farbwechseleinrichtung FWE, durch die ein Farbwechsel der Farbauffüllung in den beiden Skalenausschnitten S1 und S2 durchgeführt werden kann.

Der Differenzbildner kann ferner mit einer in der Fig. 1 dargestellten digitalen Anzeigeeinrichtung DA verbunden sein, an welcher die jeweilige Differenz der beiden Meßwerte A1 und A2 bzw. deren Abweichung voneinander, in Prozent angezeigt wird.

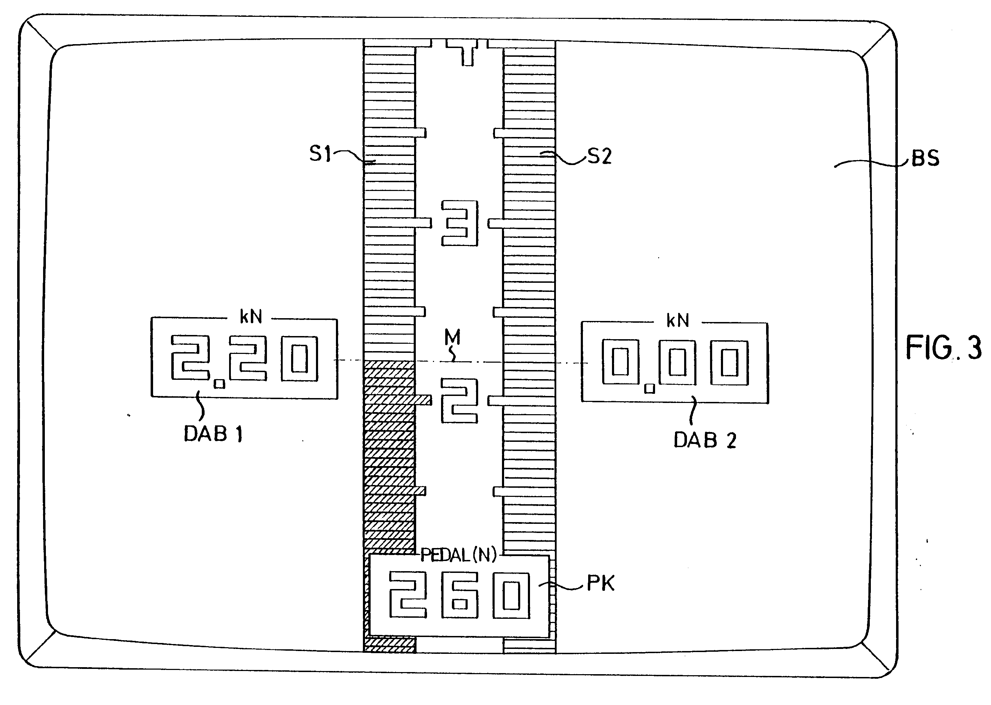

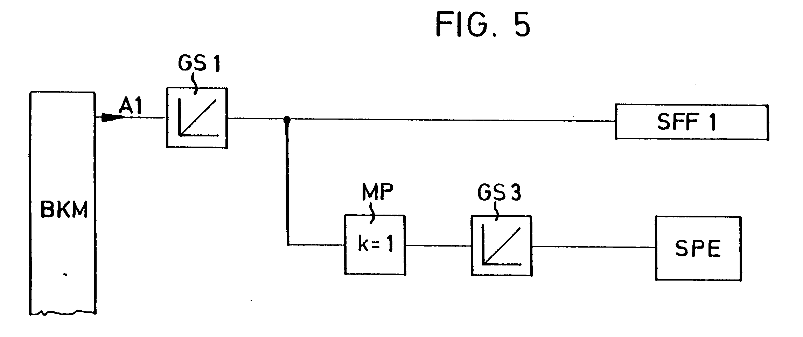

In den Figuren 3 und 5 ist die Anzeigeeinrichtung bei einem Ausführungsbeispiel mit einem Meßwert dargestellt. Falls auf dem Bildschirm BS, wie in der Fig. 3 dargestellt ist, mehrere Skalenausschnitte, beispielsweise zwei Skalenausschnitte S1 und S2, dargestellt werden, erfolgt die Positionierung dieser beiden Skalenausschnitte in folgender Weise. Der von einer Prüfeinrichtung, beispielsweise einer Bremskraftmeßeinrichtung BKM eines Bremsenprüfstands, gelieferte Meßwert A1 wird über eine Glättungsschaltung GS1 sowohl einer Skalenpositioniereinrichtung SPE als auch einer Skalenfarbfülleinrichtung SFF1 zugeleitet. Für die Skalenpositioniereinrichtung kann ein Multiplizierer MP, der den Meßwert A1 mit einem Faktor k = 1 multipliziert, sowie eine weitere Glättungsschaltung GS3 vorgesehen sein. Die Positionierung erfolgt so, daß die beiden Skalenausschnitte S1, S2 mit ihren Skalenunterteilungen bzw. Skalenstrichen, die dem Meßwert A1, beispielsweise 2,20 kN, entsprechen, auf die Bezugslinie M positioniert sind, wie das in Fig. 3 dargestellt ist. Die eine Skala (in Fig. 3 der Skalenausschnitt S1) ist dann bis zu diesem Wert mit Farbe angefüllt. Es erfolgt auf diese Weise die Analoganzeige, beispielsweise für eine Bremskraftmessung an einem Einzelrad eines Kraftfahrzeugs.

Die in den Figuren 1 bis 3 dargestellte Bezugslinie M kann auf dem Bildschirm BS sichtbar angeordnet sein. Es kann sich jedoch auch um eine auf dem Bildschirm BS nicht näher dargestellte Bezugslinie handeln, entlang welcher die jeweils ermittelten Mittelwerte in den Skalenausschnitten S1 und S2 positioniert werden. Ferner ist es auch möglich, mehr als zwei Skalenausschnitte auf dem Bildschirm BS darzustellen, wenn mehrere Meßwerte (n Meßwerte) gleichzeitig angezeigt werden sollen. Für diesen Fall wird dann zur Positionierung der Skalenausschnitte S1...Sn die Mittelwertbildung $\dfrac{A1 \ + \ A2... + An}{n}$ durchgeführt.

Anstelle von bei Bremsprüfständen kann die Erfindung auch bei anderen Leistungs- und Funktionsprüfständen, beispielsweise Aggregatprüfständen für Kupplungen, Getriebe, Gelenkwellen, Antriebsachsen, Hydraulikantriebe, Otto- und Dieselmotoren, sowie für andere Bauteile von Motoren und Fahrzeugen, zum Einsatz kommen.

**Patentansprüche**

1. Anzeigeeinrichtung für eine analoge Anzeige von mehreren Meßwerten mit einem Monitor, wobei Skalenausschnitte (S1, S2...Sn) in einer den Meßwerten (A1, A2...An) entsprechenden Anzahl am Monitorbildschirm (BS) angeordnet sind, die jeweiligen Skalenteile der Skalenausschnitte (S1, S2...Sn), welche dem Mittelwert der innerhalb der Skalenausschnitte anzuzeigenden jeweiligen Meßwerte entsprechen, auf einer Bezugslinie (M) auf dem Bildschirm (BS) liegen, und der jeweilige Meßwert (A1, A2..An) in den zugeordneten Skalenausschnitten (S1, S2...Sn) durch eine Markierung abgebildet ist, dadurch gekennzeichnet, daß ein Komparator (K) vorhanden ist, der ein Farbwechselsignal an eine Farbwechseleinrichtung (FWE) für die durch eine Skalenfarbfülleinrichtung proportional den jeweils anzuzeigenden Meßwerten (A1, A2...An) mit Farbe ausgefüllten Skalenausschnitte (S1, S2...Sn) liefert, wenn die Differenz zwischen zwei Meßwerten aus zwei verschiedenen Meßwertaufnehmern einen Sollwert überschreitet.

2. Anzeigeeinrichtung nach Anspruch 1, dadurch gekennzeichnet, daß die Skalenausschnitte (S1, S2...Sn) in Form paralleler und auf dem Bildschirm (BS) senkrecht zur Bezugslinie (M) beweglicher länglicher Balken mit quer verlaufenden Unterteilungsstrichen ausgebildet sind.

3. Anzeigeeinrichtung nach Anspruch 1 oder 2, dadurch gekennzeichnet, daß die Bezugslinie (M) im horizontalen oder vertikalen Mittenbereich des Bildschirms (BS) verläuft.

4. Anzeigeeinrichtung nach einem der Ansprüche 1 bis 3, dadurch gekennzeichnet, daß in Ruhestellung die Nullmarkierung jedes Skalenausschnittes (S1, S2...Sn) auf der Bezugslinie (M) liegt.

5. Anzeigeeinrichtung nach einem der Ansprüche 1 bis 4, dadurch gekennzeichnet, daß zwei Skalenausschnitte (S1, S2) vorhanden sind, und daß die Anzeigeeinrichtung an eine Bremskraftmeßeinrichtung (BKM) angeschlossen ist.

## Claims

1. A display device for an analog display of a plurality of measurement values with a monitor, wherein scale portions (S1, S2...Sn) are arranged on the monitor picture screen (BS), in a number corresponding to the measurement values (A1, A2..An), the respective scale parts of the scale portions (S1, S2...Sn) which correspond to the mean value of the respective measurement values to be displayed within the scale portions lie on a reference line (M) on the picture screen (BS), and the respective measurement value (A1, A2...An) is reproduced in the associated scale portions (S1, S2...Sn) by a marking, characterised in that there is provided a comparator (K) which supplies a colour change signal to a colour change device (FWE) for the scale portions (S1, S2...Sn) which are filled with colour by a scale colour filling device proportionally to the respective measurement values (A1, A2...An) to be displayed, when the difference between two measurement values from two different measurement value sensors exceeds a reference value.

2. A display device according to claim 1 characterised in that the scale portions (S1, S2...Sn) are in the form of parallel elongate bars which are movable on the picture screen (BS) perpendicularly to the reference line (M), with transversely extending subdivision lines.

3. A display device according to claim 1 or claim 2 characterised in that the reference line (M) extends in the horizontal or vertical central region of the picture screen (BS).

4. A display device according to one of claims 1 to 3 characterised in that in the rest position the zero marking of each scale portion (S1, S2...Sn) lies on the reference line (M).

5. A display device according to one of claims 1 to 4 characterised in that there are two scale portions (S1, S2) and that the display device is connected to a braking force measuring apparatus (BKM).

## Revendications

1. Dispositif d'affichage pour un affichage analogique de plusieurs valeurs de mesure, comportant un moniteur et dans lequel des sections d'échelles (S1,S2...Sn) sont disposées en un nombre qui correspond aux valeurs de mesure (A1,A2...An) sur l'écran (BS) du moniteur, les parties respectives d'échelles des sections d'échelles (S1,S2...Sn), qui correspondent à la valeur moyenne des valeurs de mesure respectives qui doivent être affichées à l'intérieur des sections d'échelles, étant situées sur une droite de référence (M) sur l'écran (BS), et l'image de la valeur de mesure respective (A1,A2...An) est formée dans les sections associées d'échelles (S1,S2.. .Sn) au moyen d'un marquage, caractérisé par le fait qu'il est prévu un comparateur (K), qui envoie un signal de changement de couleur à un dispositif de changement de couleur (FWE) pour les sections d'échelles (S1,S2...Sn) remplies par une couleur, au moyen d'un dispositif de remplissage des échelles avec une couleur, proportionnellement aux valeurs de mesure devant être respectivement affichées (A1,A2...An), lorsque la différence entre deux valeurs de mesure délivrées par deux enregistreurs différents de valeurs de mesure dépasse une valeur de consigne.

2. Dispositif d'affichage suivant la revendication 1, caractérisé par le fait que les sections d'échelles (S1,S2 ...Sn) sont réalisées sous la forme de barres parallèles et allongées, mobiles sur l'écran (BS) perpendiculairement à la droite de référence (M) et possédant des traits de subdivision transversaux.

3. Dispositif d'affichage suivant la revendication 1 ou 2, caractérisé par le fait que la droite de référence (M) s'étend dans la zone centrale horizontale ou verticale de l'écran (BS).

4. Dispositif d'affichage suivant l'une des revendications 1 à 3, caractérisé par le fait que dans le position de repos, le repère zéro de chaque section d'échelle (S1,S2...Sn) est situé sur la droite de référence (M).

5. Dispositif d'affichage suivant l'une des revendications 1 à 4, caractérisé par le fait qu'il est prévu deux sections d'échelles (S1,S2), et que le dispositif d'affichage est raccordé à un dispositif (BKM) de mesure d'une force de freinage.

FIG.1

EP 0 529 223 B1

FIG. 2

FIG. 3

FIG. 4

EP 0 529 223 B1

FIG. 5